# EUROPEAN PATENT SPECIFICATION

(11) **EP 1 917 891 B1**
(45) Date of publication and mention of the grant of the patent: **29.09.2010**
(21) Application number: 07119689.3
(22) Date of filing: 31.10.2007
(51) Int. Cl.: A47J 39/00

(54) **Apparatus for the heat storage of food stuffs**
Gerät zum Warmhalten von Lebensmitteln
Appareil pour maintenir des aliments au chaud

(30) Priority: 01.11.2006 FI 20060961
(43) Date of publication of application: 07.05.2008
(73) Proprietor: Porkka Finland Oy, 15860 Hollola (FI)
(72) Inventor: Kauppinen, Juha, FI-16800, Hämeenkoski (FI); Savelius, Paavo, FI-81860, Viekijärvi (FI)
(74) Representative: Tanhua, Pekka Vilhelm

(56) References cited:
- US-A- 3 887 716
- US-A- 4 623 780
- US-B1- 6 369 362

## Description

The invention relates to an apparatus according to the preamble of claim 1 that can be used for the storage of foodstuffs.

Such an apparatus is known from the document US 6 369 362.

The invention also relates to a method according to the preamble of claim 14 for adjusting the air temperature and relative humidity in the interior of a heat storage apparatus.

When foodstuffs are kept warm for distribution by a conventional, air-heated heat storage apparatus, the foodstuffs are remarkably dried up as the moisture is vaporized therefrom. This results in changes in the surface structure of the foodstuffs, and the food looses its succulence and becomes wilted.

In so-called low temperature stoves, this problem is solved so that the foodstuffs own moisture is utilized for creating a vapor block during the heating process. Even if the product (= foodstuff) is thus prevented from further drying during the heating, the product still dries when moisture is evaporated for forming the vapor block. The principle of forming a vapor block, known from low temperature stoves, does not function in devices designed for food distribution and for keeping food warm, such as heat cabinets, because the heat cabinet doors must be continuously opened and closed, so that the vapor block created in the interior of the cabinet evaporates.

In the prior art, attempts have been made to eliminate the above mentioned problem by means of heat storage apparatuses provided with a separate heating and moisturizing unit, by which the interior air temperature and relative level of humidity in the heat storage apparatus is attempted to be maintained suitable for each foodstuff. The employed moisturizing unit is a water reservoir, on the bottom of which there is arranged a fairly large electric resistor, by which aqueous steam is vaporized in the air space. A suitable relative level of humidity for each foodstuff at a certain temperature is the same as the quantity of active water contained in said foodstuff at the temperature in question. Suitable relative humidities of foodstuffs are discussed in the literature. For the heating of a heat storage cabinet, there are used heating elements connected to the inner walls of the cabinet, and a possible air flow is created by means of a high-power blower.

Even if the method used in the above described heat storage apparatuses solves some of the problems connected to heat storage cabinets and the wilting of foodstuffs, because moisture is brought from outside into the storage space of the apparatus to replace the moisture that has evaporated from the foodstuffs, it is difficult for heat storage apparatuses applying said method, such as heat cabinets, to maintain an even humidity and temperature in the interior, particularly if the cabinet has a large storage capacity. Uneven temperature and humidity conditions inside the cabinet result in that in some parts of the cabinet, there are left pockets where the moisture level is too high/low with respect to keeping up the correct moisture level. The former results in the wilting of the food, the latter in its becoming watery, which both are undesirable phenomena with respect to the storage of food.

The main problem with this kind of heat storage cabinet, inside of which even temperature and humidity conditions cannot be maintained, is that the range of usage of the cabinet is drastically reduced, because its size and hence its storage capacity must be maintained relatively small. Consequently, this kind of heat cabinet cannot be connected for example to such high-capacity food dispensing devices that are used for instance in institutional kitchens, canteens and restaurants. The above described capacity problems in these known heat cabinets arise from problems in the air circulation, and as a result, the moisturized air is not distributed evenly in the air mass inside the cabinet.

Another main problem in the prior art has been connected to the requirements for collecting and recording the history of foodstuffs storage temperature in the foodstuffs processing chain. In the prior art heat storage apparatuses, food temperature does not remain constant, due to the evaporation of moisture when opening and closing the door. An even humidity and temperature inside the cabinet is essentially important, among others, for the control of the heating and moisture history of foodstuffs, and for instance in the above described prior art method, moisture is distributed unevenly inside the storage space, and the temperature measuring process easily becomes unreliable, when the temperature and humidity levels fluctuate remarkably inside the apparatus.

A third drawback in prior art heat storage cabinets is their susceptibility to the growth of microbial population, due to drawbacks both in the device technology and methods. In heat storage cabinets, food is generally meant to be kept more or less at the serving temperature, which falls within the growth range of several microbes. In case the heat storage cabinet also is functionally connected to food distribution, collection or processing equipment, the cabinet door must be continuously opened and closed. In prior art heat cabinets, where it is not possible to create efficient humidity and temperature conditions that would also be homogeneous throughout the whole interior of the cabinet, the cabinet walls are easily dried. In case food happens to stick to the heat cabinet walls when it is taken out or put in, it easily burns on the walls, particularly in a case where the heating of the storage cabinet interior is carried out through the inner walls. Such dried-up leftovers form potential substrates for microbial growth. In some prior art heat storage cabinets, water is heated by a resistor placed in a water reservoir that is permanently installed on the bottom of the device, and water is fed to the reservoir through a water conduit. This kind of water reservoir is extremely susceptible to getting dirty.

A fourth drawback in prior art heat storage cabinets has been the high energy consumption of the cabinets, which has mainly been due to the high-power heating and blowing equipment used in the cabinets, as well as to the intake of fresh replacement air.

The object of the invention is to realize an apparatus for the heat storage of foodstuffs, in which the drawbacks of the prior art can be eliminated.

Hence the main object of the invention is to realize an apparatus for the heat storage of foodstuffs, in the whole interior of which there is created a temperature and relative humidity of air that can be kept constant in all conditions. The relative humidity should be approximately the same as the quantity of active water contained in the foodstuffs at said temperature.

A second object of the invention is to realize an apparatus for the heat storage of foodstuffs, in which apparatus the level of hygiene can be kept sufficient in all usage conditions.

A third object of the invention is to realize a heat storage apparatus that is energy-efficient in all conditions.

More precisely, the invention relates to an apparatus for the heat storage of foodstuffs according to the characterizing part of claim 1.

The invention also relates to a method for adjusting the temperature and relative humidity of the air contained in the interior of the heat storage apparatus according to claim 1.

An apparatus according to the invention, meant for heat storage of foodstuffs, is provided with an aperture for taking foodstuffs out of the interior of the device and for putting them in the interior of the device, as well as adjusting means for adjusting the relative humidity and temperature of the air contained in the interior of the apparatus. The adjusting means for adjusting the relative humidity and temperature of the air contained in the interior of the apparatus include at least one air moisturizing unit comprising an essentially horizontal water reservoir. The adjusting means further comprise:
- at least one unit for reducing the relative humidity of air, said unit being designed for heating air and conducting it in a controlled manner, comprising a vertical housing that is located in the interior of the apparatus and is open at the top and bottom ends and includes means for reducing the relative humidity of air as well as transferring means for conducting air from the lower part of the housing towards the bottom of the apparatus. Said unit can be used for reducing the relative humidity in only a certain part of the total air mass contained inside the apparatus, without actively taking replacement air from outside the apparatus, in which case each housing is placed in the interior of the apparatus, at a location where the air flow proceeding downwards, towards the bottom underneath its lower edge, turns towards the inner walls of the apparatus;
- an air moisturizing unit that is located lower than the lower edge of the housing and where at least the water reservoir can be pulled out of the interior of the apparatus;
- an adjusting system for measuring and adjusting the interior air temperature and air humidity of foodstuffs, said system comprising at least one sensor for measuring the relative humidity of air, at least one sensor for measuring the air temperature and possibly sensors that can be used for measuring the temperature and/or moisture of foodstuffs; an unit for collecting, processing and recording temperature and humidity data and for adjusting the air temperature and air humidity in the apparatus.

In this application, the interior of the apparatus refers to the space defined by the bottom, ceiling and walls of the heat storage apparatus, which space can be used for the storage of foodstuffs.

The basic idea of the invention is to place a water vaporizing unit in the interior of an apparatus meant for heat storage of foodstuffs for moisturizing the air, and a separate unit arranged in a closed space for reducing the relative humidity of air and for transferring the air mass, generally comprising air heating and blowing equipment. The employed air heating and transferring unit is a device that heats and blows air with special targeting. The term targeted heating here means that of the total air mass contained in the interior, there is at a time heated only a certain part left inside the housing located in the interior of the apparatus. After leaving the housing, the air heated inside the housing is blown from top to bottom, in which case said blown air is set in a circulating motion directed upwards from the bottom, said circulating motion being the natural flowing direction of the air that is warmer than its surroundings. The water vaporizing unit is located below the lower edge of the air heating and transferring unit, along the same vertical line as said air heating and transferring unit, or immediately adjacent to said vertical line. Now the air that has left the air heating and transferring unit proceeds to the vaporizing unit, and after passing it, transfers the moisture evenly to the whole air mass in the interior of the apparatus. When air is heated inside the closed housing, its relative humidity is reduced. By blowing the heated air with a relative humidity lower than that of the surroundings towards the water reservoir located at the bottom of the device, a maximum amount of aqueous steam can be bound to the air. In an apparatus according to the invention, replacement air is not actively taken from outside, as opposed to some corresponding prior art arrangements, and therefore there is achieved a more accurate adjusting of the air humidity and temperature. The water vaporizing unit included in the apparatus according to the invention can be moved to outside the apparatus, which brings forth a remarkable advantage from the point of view of cleaning the equipment. In addition, the apparatus also includes an adjusting system, generally comprising one sensor for measuring the relative humidity of the interior air, and one sensor for measuring the temperature of the interior air, as well as a sensor that can be used for taking random samples of temperature and/or humidity of the foodstuffs contained in the storage chamber. The adjusting system is used for collecting temperature and humidity data from the interior, and on the basis of said data, the adjusting unit changes the temperature and humidity of the interior air.

In this application, the term storage chamber refers to that part of each apparatus that has its own air circulation, i.e. a water vaporizing unit and an air heating and blowing unit.

Active replacement of air means that the apparatus only takes in air through the door, i.e. generally when foodstuffs are put in the apparatus or removed therefrom.

The above described drawbacks connected to the prior art are eliminated by the use of this kind of apparatus meant for the heat storage of foodstuffs: water is vaporized either continuously, when necessary or according to preset values in the interior of the apparatus, where it is distributed evenly to the whole air space, owing to the recirculation of air. Now an opening of the door of the apparatus does not dry up the foodstuffs, because the aqueous steam that escaped when the door was opened is replaced by water vaporized in the vaporizing unit. Neither does an opening of the door affect the humidity of the and air flows to any great extent, because only a small part of the air mass is at a time transferred by blowing, and a blow is directed from top to bottom; in prior art devices, the blowers are placed in the rear wall or the ceiling, and they are used for transferring a large part of the air mass contained in the space, in which case an opening of the door results in that the blowers blow part of the air directly out of the door, thus enhancing the process of lowering the relative humidity.

The drawback typical to prior art devices, i.e. the problem to achieve a sufficient level of hygiene, is in an apparatus according to the invention solved first of all by heating the water reservoir indirectly, i.e. the water reservoir is not heated by means of a resistor placed in an open space in the water reservoir, but indirectly by a resistor placed underneath the bottom of the water reservoir, which resistor is advantageously a mat resistor. Another factor that ensures the level of hygiene in an apparatus according to the invention is the above described generation of even moisture in the interior of the apparatus, in which case any food that happens to get on the walls cannot burn and stick to the inner walls of the apparatus. By distributing the aqueous steam evenly in the interior of he apparatus, there is achieved the advantage that when the apparatus is made as a heat storage cabinet, the capacity of the interior of the apparatus can be made larger than usual. A high-capacity heat storage apparatus can be connected to food distribution equipment. The air heating and transferring units provided in the heat storage apparatus, the moisture adjusting unit and the vessels used for storing the foodstuffs are advantageously detachable, which helps to keep up a sufficient level of hygiene in the interior of the apparatus. The water vaporizing unit belonging to the apparatus according to the invention can be moved to outside the apparatus, in which case it is easily cleaned, and a separate water duct to the water reservoir is not needed in the apparatus.

With respect to the further advantages achieved by the invention, let us point out the following: the advantage achieved by even humidity and temperature conditions is a drastic improvement in the reliability of measuring temperature and interior air humidity; at present, there is needed precise information as regards the moisture and/or temperature history of foodstuffs during the processing thereof. Irrespective of the larger size of the interior of an apparatus according to the invention with respect to prior art apparatuses, the interior air temperature/humidity can be measured and adjusted reliably and automatically for example by suitable logics, provided with one humidity and temperature sensor per storage chamber, installed in the interior of the apparatus, a data storage means where data can be stored for further control, and an adjusting unit by which the interior air temperature and humidity are adjusted by vaporizing moisture in the water vaporizing unit and by heating air by the air heating resistor provided in the housing. Because only a small part of the total air mass contained in the interior of the apparatus is processed at a time (heating + blowing) in a housing arranged separately in the interior, and replacement air is not actively taken from outside, the apparatus can use air heating resistors and blowing equipment with a remarkably lower power consumption than in known heat storage apparatuses that process the total air mass contained in the interior of the apparatus, and replacement air with a different temperature is taken from outside.

Other advantages achieved by the invention and its various preferred embodiments are apparent from the appended drawings and their description, as well as from the dependent claims that refer to preferred embodiments of the invention.
Figure 1 shows a simplified perspective illustration of a heat storage cabinet according to the invention, with the cabinet front wall removed.
Figures 2A and 2B are schematical illustrations of an adjusting system used in an apparatus according to Figure 1, provided with an interior air humidity and temperature adjusting and measuring arrangement, and humidity and temperature data processing units.
Figure 3A is a perspective illustration of an interior temperature and moisture adjusting device used in an apparatus according to Figure 1.
Figure 3B shows the adjusting device illustrated in Figure 3A, seen in a partially exploded view.
Figure 3C is a perspective illustration of the units used for adjusting the humidity and temperature of the air contained in the interior of the heat storage cabinet illustrated in Figure 1.
Figure 4 is a perspective illustration of a heat cabinet according to the invention, provided with a distribution reservoir.
Figure 5 is a simplified perspective illustration of heat storage according to the invention, provided with several storage chambers, shown with the cabinet front wall and one of the side walls removed.
Figure 6 is a perspective illustration of an embodiment of the invention, where a distribution reservoir is connected to the heat cabinet, and where the electric connection of the moisture adjusting unit is realized in an alternative way.
Figure 7A is a perspective illustration of another embodiment of the invention, where the height of the heat storage cabinet height is larger than its length.
Figure 7B is a perspective illustration of a heat storage cabinet according to Figure 7A, provided with foodstuff containers that can be pulled out on a rack.

Let us now deal with the main features of the structures and functions illustrated in the drawings.

An apparatus 1 according to the invention, to be used for the heat storage and/or heating of foodstuffs, is always provided with one or several water vaporizing units 2, an air heating and blowing unit 3 and adjusting devices 4 formed of an adjusting system 5 arranged in a storage chamber 100 of the apparatus.

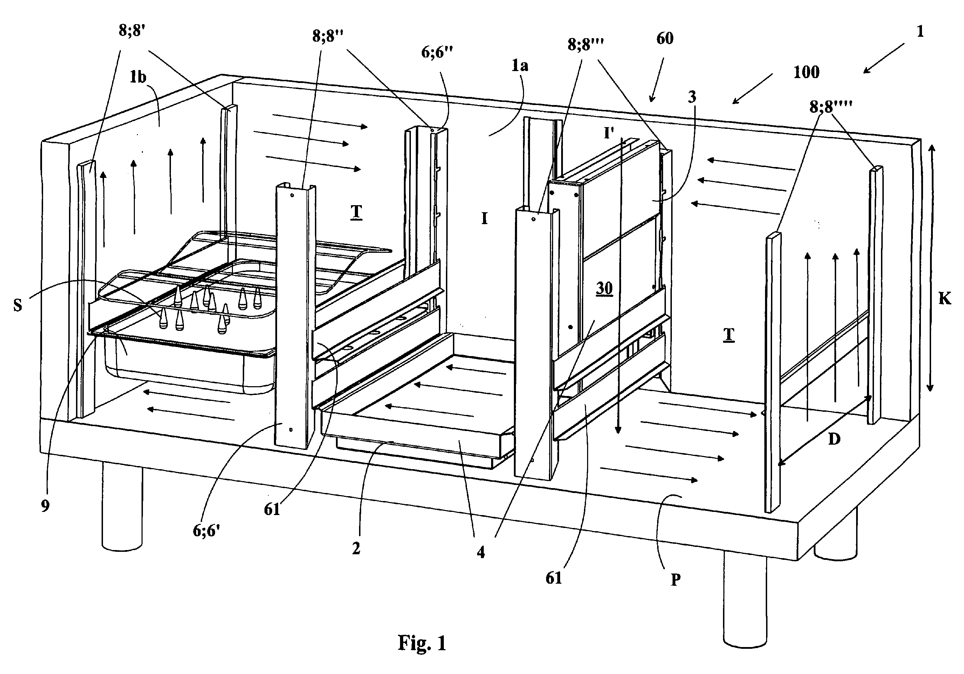

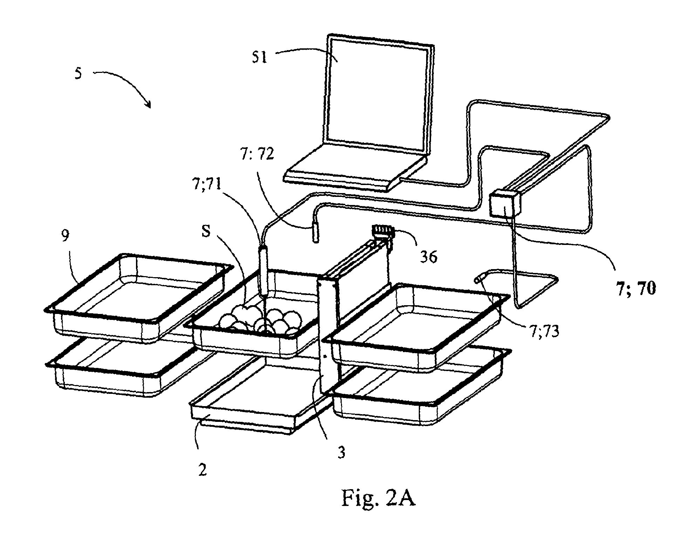

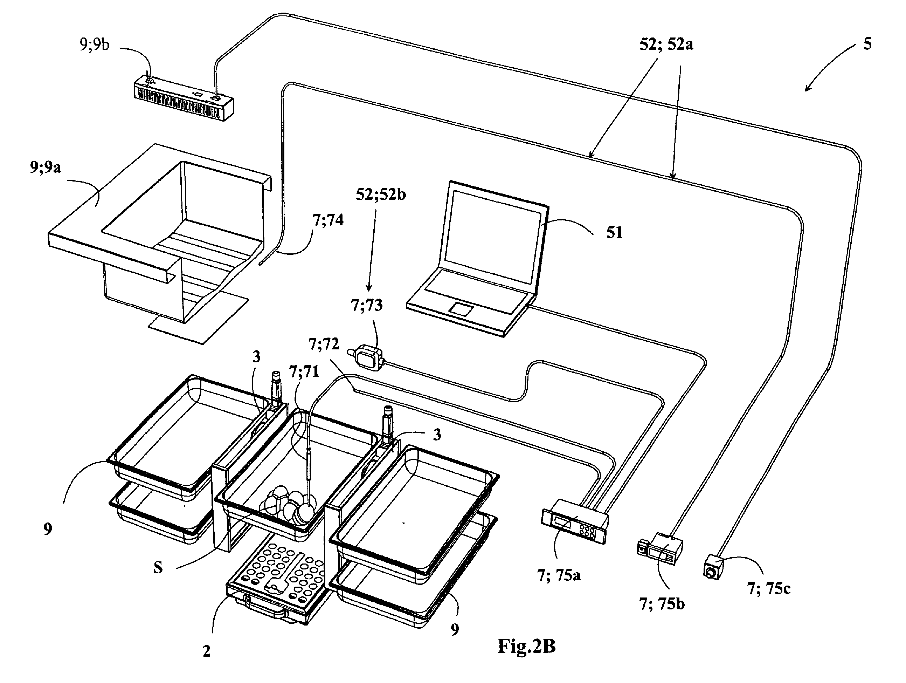

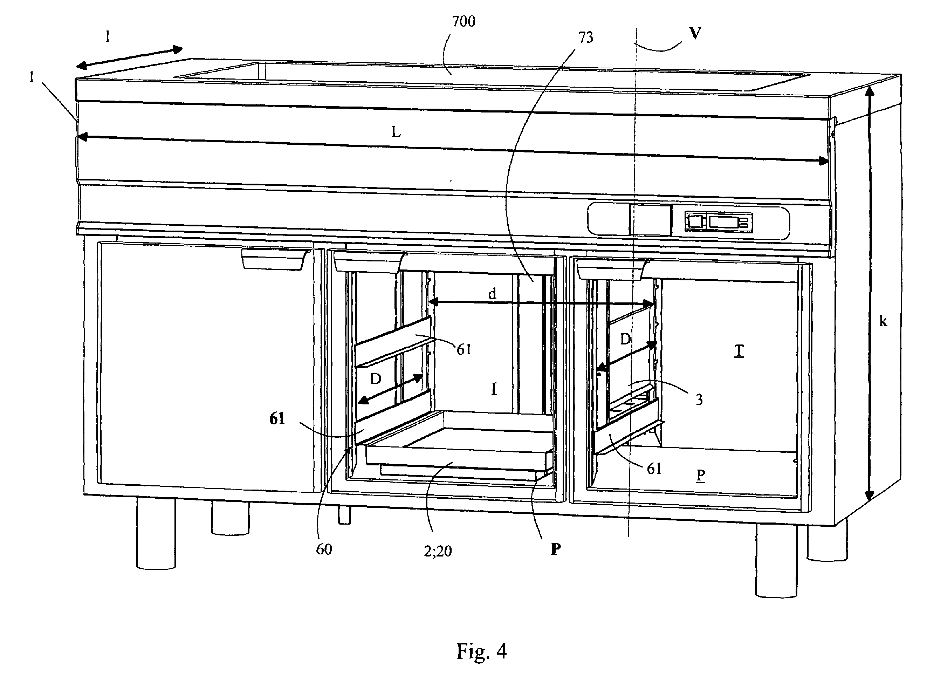

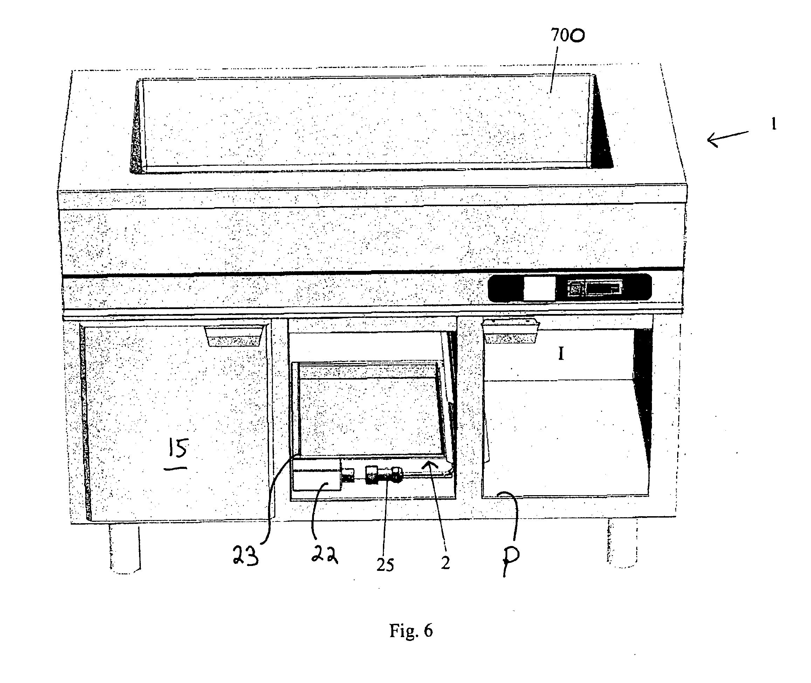

Figure 1 shows a simplified view of an apparatus 1 used for the heat storage of food, said apparatus 1 having one chamber and being provided with a water vaporizing unit 2 and air heating and blowing unit 3, as well as an adjusting device 4 formed of an adjusting system 5 seen in more detail in Figures 2A and 2B. In cross-section, the heat storage apparatus 1 is a rectangular heat storage cabinet 1, the length of said cabinet being L and its width I, said measures being the same as the lengths L and I of the lengthwise inner walls 1 a and the widthwise inner walls 1b respectively (Figure 4). Figure 1 shows the circulations of air I in the interior T of the apparatus 1; by which circulations there is created a moisture lock at a desired relative humidity RH % of air. In Figure 1, there are omitted, among others, the temperature sensors forming part of the adjusting system, which are illustrated in more detail in Figures 2A and 2B. Figures 4 and 6 show a cabinet 1, similar to the one illustrated in Figure 1, to be used in the heat storage of food, where also a food dispensing arrangement 700 is integrated above the cabinet 1.

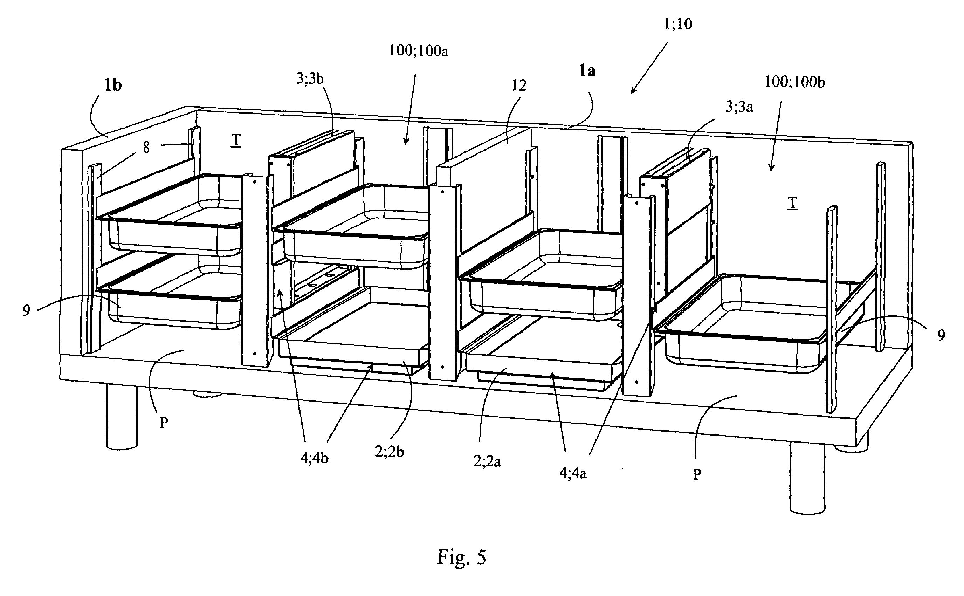

Figure 5 shows a heat storage cabinet 11; 10 comprising two heat storage chambers 100; 100a, 100b, in which case at least part of the chambers 100 are provided with their own adjusting device 4: 4a, 4; 4b comprising a water vaporizing unit 2, an air heating and blowing unit 3 and a unit for measuring the temperature and humidity of the interior air. The control systems of the adjusting means of different chambers can be partly or completely integrated, at least as regards the adjusting unit 52; 52b of the humidity and temperature of the air contained in the chambers, and the temperature and humidity data collecting, processing and recording unit 51. This kind of embodiment of the heat storage cabinet 1; 10 according to the invention is advantageous, when various different foodstuffs are stored in one and the same heat storage cabinet, and/or when the capacity of the heat storage cabinet should be increased. Both of said features are particularly advantageous, when the storage cabinet is used as part of a distribution device, or in connection with it.

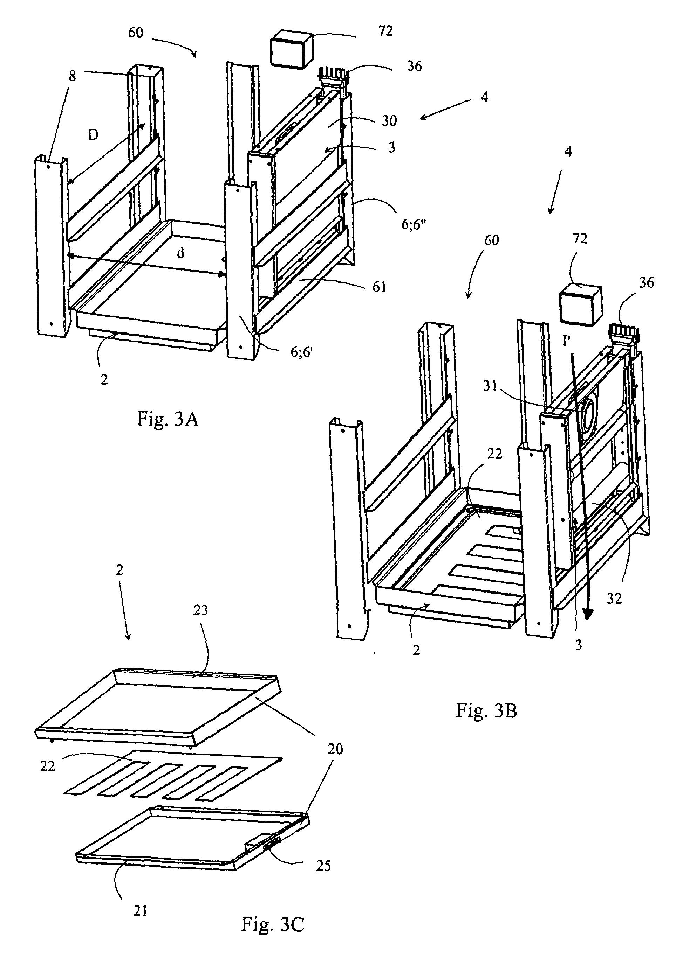

The water vaporizing unit 2 employed as the air moisturizing unit 2 of the adjusting device 4, as well as the air heating and blowing unit 3 employed as the air humidity adjusting unit 3, used in a uni-chambered heat storage apparatus 1 of the invention according to the Figures 1 and 4, are described in Figures 3A - 3C. The adjusting system 5 of the adjusting device 4 in an apparatus 1 according to Figure 1 is schematically illustrated in Figures 2A and 2B. The adjusting system 5 also collects monitoring data as regards the temperature and moisture of the foodstuffs during storage in the heat cabinet 1.

The principal idea of an apparatus 1 according to the invention is to continuously maintain in the interior T of the apparatus a relative humidity RH % of air that is roughly on the same level as the active water contained in the foodstuffs. When heating the foodstuffs S, the quantity of water evaporated therefrom depends on the quantity of active water contained in the foodstuffs. In case the relative humidity in the interior of the heat storage apparatus is maintained the same as the quantity of active water contained in the foodstuffs at said temperature, water is not evaporated from the foodstuffs. The quantity of active water contained by different foodstuffs at each temperature can be defined either empirically or on the basis of values obtained from the literature. Preferably the relative humidity of air is adjusted to be essentially the same as the quantity of active water contained in the foodstuffs at said temperature. In case several different foodstuffs should be kept warm in the heat storage cabinet for serving/distribution, the moisture in the interior of the device is adjusted at the average balance moisture of the foodstuffs (= average quantity of active water) and/or there is used a multi-chambered heat storage cabinet.

The adjusting system 5 illustrated in Figures 2A and 2B comprises a processing and recording unit 51 for the temperature and humidity data of the interior air T and/or for the temperature and humidity data of the food, such as a computer 51, and a number of sensors 71, 72 and 73, 74 and displays 75a, 75b and 75c of the measuring unit 7. Now the sensor 71 is used for measuring the temperature of the foodstuffs, and the sensors 72 and 73 respectively are used for measuring the temperature or humidity of the interior air T, and the sensor 74 is used for measuring the temperature of the heat compress 9; 9a. The adjusting system also includes processing logics (not illustrated), an adjusting unit 52; 52b for adjusting the humidity and temperature of the interior air, and an adjusting unit 52; 52a for measuring the temperature of the heat compress 9; 9a. In the adjusting unit 52; 52b for adjusting the humidity and temperature of the interior air, there also is connected an injection sensor 71 for taking random samples of the temperature of the foodstuffs S. The adjusting unit 52; 52b for adjusting the humidity and temperature of the interior air also includes a display 7; 75a for indicating the humidity and temperature of the interior air 1 and of the foodstuffs S.

Figures 2A and 2B show a sensor 71 for taking random samples of the temperature inside the foodstuff S, and a sensor 72 for measuring the temperature of the interior air. The sensor 73 for measuring the relative humidity of air is located for example in the lengthwise back wall 1 a of the apparatus. The temperature sensors 71 and 72, and the sensor 73 for measuring the relative humidity of air, monitor the humidity and temperature values for instance at certain intervals or continuously, and the data is processed by a computer 51 and stored for possible control operations to be carried out later. The sensor 72 for measuring the air temperature is located for example in the vicinity of the air heating and blowing unit 3, as can be seen in Figures 3A and 3B. On the basis of the temperature and humidity data obtained from the sensors, the operation of the water vaporizing unit 2 and the air heating and blowing unit 3 is adjusted by intermediation of the adjusting unit 52; 52b, so that a desired temperature and a relative humidity RH % suitable for the foodstuffs prevails inside the heat cabinet all the time, said relative humidity being in balance with the active water contained by the foodstuffs at said temperature T. The adjusting unit 52; 52b is used for heating the water contained in the water reservoir 23 by a mat resistor 22, and the air flowing in the housing 30 by a resistor 32 provided in the housing 30.

Now the temperature sensors 71, 72 are advantageously connected to an electronic thermostat, in which the temperature can be accurately controlled. Another alternative is to connect the temperature and relative humidity sensors 7; 71, 72, 73 to a PDI adjuster 7; 70 illustrated in Figure 2A, which PDI adjuster is used for adjusting the operation of the water vaporizing unit 2 and the air heating and blowing unit 3. Figure 2A also shows a quick connector 36 for detachably connecting a digital temperature display and temperature sensor (cf. Figures 3A and 3B) in the heating and blowing unit 3 used for reducing the relative air humidity. Apart from a separate digital temperature display, the system can also include a separate digital relative humidity display, which is connected to the sensor 73 measuring the relative humidity in the interior. Figure 2B shows a display 7; 75a connected to the temperature sensors 71 and 72 and to the relative humidity sensor 73 of the adjusting unit 5; 52b. Figure 2B also shows an adjusting unit 5; 52a, used for adjusting the temperature of the heat compress 9; 9a by intermediation of an infrared radiator 9, and for measuring the temperature of the heat compress by intermediation of a temperature sensor 7; 74. The adjusting unit also includes a status display 7; 75c of the infrared radiator, and a temperature display 7; 75b of the heat compress.

In a heat storage apparatus according to the invention, for the heating and blowing of air and for the heating of water, there is used an adjusting device 4, and the unit 3 for reducing the relative humidity of air and the air moisturizing unit 2 provided therein are illustrated in Figures 3A - 3C.

For reducing the relative humidity of air in the interior T of the heat storage apparatus 1, i.e. for heating and transferring air, there is used the unit 3. Said air blowing and heating unit 3, employed for reducing moisture, comprises a vertical housing 30 that is open at the top and the bottom, inside which housing there are installed heating resistors 32 and an air blower 31 that blows air downwards from top to bottom, past the heating resistors 32. The air sucked inside the hollow housing 30 through the open top part owing to the operation of the blower 31 is heated to a desired temperature inside the housing 30 of the air blowing and heating unit 3 by intermediation of the resistors 32 placed in the air flow and is discharged, pushed by the blower 31, through the open lower part of the housing towards the bottom P located underneath the housing. The air humidity and temperature adjusting device 4 also includes a water vaporizing unit 2 employed as the air moisturizing unit and placed adjacent to the described air blowing and heating unit 3. The air moisturizing unit 2 includes a horizontal, plate-like housing 20. The housing 20 has two parts, comprising a shallow water reservoir 23, where at least the bottom is made of some heat conductive material, such as stainless steel, and an electric connection 25 connected to the lower edge of the water reservoir. The electric connection 25 must be safe in the humid and warm conditions of the heat cabinet. Figure 6 shows an alternative way for realizing the electric connection 25 of the resistor 22 of the vaporizing unit 2, in which case the electric connection is made directly to the frame of the apparatus. In between the bottom P and the water reservoir 23, there is arranged a heating resistor 22 for indirectly heating water through the reservoir bottom. Outside the apparatus, in connection with the interior, there is arranged a digital temperature display, the sensor 72 whereof is located for instance in the vicinity of the containers 9 of the foodstuffs S. Said display obtains temperature readings from the sensor 72 measuring the interior air temperature.

Figures 7A and 7B illustrate yet another way of realizing the heat storage cabinet 1 according to the invention. In said heat storage cabinet 1, the height K is remarkably larger than the length L. In the heat storage cabinet illustrated in Figure 7A, the foodstuff containers are placed on horizontal guide bars 61 running along the side walls of the apparatus, on the surface of the housing 30 of the air blowing and heating units. As for Figure 7B, the heat storage cabinet is provided with a loading roller 90, on which the foodstuff containers 9 can be brought in and out of the door 15 of the heat storage cabinet.

Figure 1 illustrates the circulation of air generated by this kind of adjusting unit 4 to the interior T of the device 1, and the placing of the water vaporizing unit 2 provided in said adjusting unit with respect to the air blowing and heating unit 3 and the inner walls and bottom of the device 1. All these factors are important for the realization of the invention.

In a heat storage apparatus 1 according to the invention, the purpose is to create in the interior T of the apparatus a so-called moisture lock that prevents moisture from evaporating from the foodstuffs. In order to achieve this aim, on the opposite lengthwise inner walls 1 a of the apparatus, and/or possibly also on the horizontal inner walls 1 b thereof, there is attached a number of pairs of support beams 8 serving as the supporting frame 60 of the vertical adjusting device 4 and of the food container vessels 9. The mutual distance D of the support beams 6' and 6" in each pair of support beams 8 in the width direction of the apparatus is generally roughly the same as the length I of the horizontal inner wall 1b, reduced by the thickness of the support beams 6. In case the support beams 6 of the pairs of support beams 8 are located on the opposite lengthwise walls of the heat storage cabinet 1, the first beam 6' is supported against one lengthwise inner wall, and the second beam 6" of the pair of support beams is supported against the opposite lengthwise inner wall, opposite to the first beam, so that in between the support beams 6" and 6", there can be attached horizontal guide bars 61. In case the beams 6; 6' and 6; 6" of the pair of support beams 8 are attached to the horizontal inner walls 1 b, they are installed at the corners of the horizontal inner wall 1 b and the lengthwise inner wall 1a. To adjacent beams 6' and 6" of the pairs of support beams 6, there can be detachably attached a vertical component of the adjusting device 4, i.e. an air heating and blowing unit 3. In the lengthwise direction of the apparatus, the mutual distance of two successive pairs of support beams 8 is d, said distance depending on the types of equipment fastened to the guide bar/guide bars 61 supported against each pair of support beams. In between successive pairs of support beams 8, there can now be arranged the container vessels 9 of foodstuffs S by detachably fastening them to the guide bars of each pair of support beams. The water vaporizing unit 2 of the adjusting unit is arranged in the vicinity of the apparatus bottom or on the bottom P, in between two successive pairs of support beams 8" and 8"'. The water vaporizing unit 2 is fastened at the bottom P or in the immediate vicinity of the bottom, detachably on the horizontal guide bars 61 of the support beams 6 of the pairs of support beams 8, by means of a sledge supported against said guide bars. When the adjusting units 2,3 and container vessels 9 are detachably fastened to the support beams 6, to the bottom P and/or to the guide bars 61, they can be detached for instance for the maintenance or cleaning of the apparatus. In the case of the water vaporizing unit 2, the water reservoir 23 can be pulled out of the apparatus along the guide bars 61 and filled with water, wherefore a separate duct is not needed for the water reservoir. In the embodiment illustrated in Figure 1, to the inner walls of the apparatus, there are fastened four pairs of support beams 8; 8', 8", 8"', 8"".

In the embodiment of the invention illustrated in Figure 1, the pair of support beams 8; 8' located furthest on the left-hand side, and the pair of support beams 8; 8"" located furthest on the right-hand side, are fastened to corners left between the lengthwise and widthwise inner walls 1 a, 1 b of the apparatus. In the middle of said pairs of support beams 8' and 8"", there are left two pairs of support beams 8; 8' and 8; 8"', which are fastened in a vertical position to the lengthwise side walls 1 a.

The adjacent support beams 6', 6" of each pair of support beams 8 are located at a mutual distance D in the widthwise direction of the apparatus. The distance d in between two successive pairs of support beams in the lengthwise direction of the apparatus is always the same, and at the same time it also is the distance left between the guide bars 61' and 61" attached to the beams of said pairs of support beams. In between two successive pairs of beams 8' and 8", located on the left-hand side in the drawing, there is arranged a horizontal food container vessel 9 attached to the horizontal guide bars 61 of the support beams 6 of said pairs of support beams 8', 8", near to the bottom P of the heat storage apparatus. To the horizontal guide bars and support beams of two successive middle pairs of the support beams 8" and 8"', there are connected the units 2 and 3 of the adjusting system 4. Among said units, the air blowing and heating unit 3 having a vertical housing 30 is fastened detachably at its vertical edges to the support beams 6' and 6". The width of the housing 30 of the air blowing and heating unit 3 is approximately the same as the width L of the heat storage apparatus 1, and near the ceiling of the interior T of the apparatus, it extends towards the vicinity of the bottom of the apparatus, i.e. the height of said housing 30 is somewhat lower than the height K of the apparatus 1. As can be seen in Figure 3A, the housing is relatively short in the dimensions of the longitudinal direction d of the apparatus. Inside the housing 30, there is room for only part of the interior air mass I at a time, and said housing conducts said part of the air mass from the top part T of the interior of the apparatus to the lower part. Thus the heating unit can take in the air to be heated and circulated from the top part of the apparatus and blow a certain heated air mass I' from the lower part of the housing 30 of the unit 3 to the air space T of the apparatus, to the vicinity of the bottom P of the apparatus. The air vaporizing unit 2 is placed adjacent to the same pair of support beams 8''' to which the vertical air blowing and heating unit 3 is connected. The vaporizing unit 2 can be attached in between successive pairs of support beams 8" and 8'" on horizontal guide bars 61 on the bottom P, as is apparent from Figure 4, but it can as well be immersed in the bottom P. At least the water reservoir 23 of the vaporizing unit is pulled out of the door opening along horizontal guide bars 61 for cleaning the reservoir and for filling it with water. Figure 1 shows an alternative way for placing the vaporizing unit. The water vaporizing unit 2 can be set underneath the air blowing and heating unit 3, along the same vertical line V as the blowing and heating unit 3, but generally it is arranged adjacent to said line, underneath the lower edge of the blowing and heating unit 3.

In Figure 1, there is drawn the flowing direction of the air blown from the lower part of the air blowing and heating unit 3 towards the bottom P; part (I') of the air mass (I) located in the space T proceeds from the lower edge of the housing 30 of said unit 3 towards the bottom P of the apparatus and is directed therefrom, in the direction of the bottom, towards the inner sides 1a, 1b of the apparatus, preferably towards the widthwise inner sides 1 b. At the inner sides 1 a, 1 b at the latest, the air rises upwards and returns through the top part of the apparatus to the blowing and heating unit 3. When proceeding near the bottom P, the heated air flow passes over the horizontally installed water reservoir 23 of the water vaporizing unit 2 and seizes at the same time along the aqueous steam that is vaporized in the water reservoir. After the water reservoir, the air flow proceeds in the direction of the bottom, until it reaches the food container vessel 9 located somewhat higher than the bottom. When passing over the vessel 9, the air flow moisturizes the food S placed in the vessel, thus preventing it from drying. The above described way for circulating air, where only part (I') of the air mass (I) contained in the space T is heated in the housing 30 with closed sides and conducted from the housing to the water reservoir 23 to be moisturized immediately before the air reaches the foodstuffs S, brings forth a particularly advantageous and easily controllable effect in the food moisture balance: the air proceeding through the housing 30 from top to bottom is heated inside the housing 30 when passing the resistors 32, so that its relative humidity is reduced. When the heated air mass reaches the water reservoir 23, its relative humidity is lower than that of the surrounding, colder air mass, in which case it absorbs humidity from the water reservoir 23. Thus the recently moistened air arrives from the vaporizing unit 2 to the foodstuffs S exactly when it contains a maximum amount of moisture. Consequently, it can always be assumed that the relative humidity of the air T in the interior of the apparatus is highest at the foodstuffs, irrespective of possible openings and closings of the doors of the apparatus. In case the total air mass I contained in the space T would be heated, and the air were blown downwards from top to bottom or sideways as in prior art devices, the air would be scattered and cooled on the way, and it would be difficult to control the quantity of water absorbed by it from the moisturizing reservoir. Moreover, an opening of the apparatus door would remarkably disturb the air circulation and moisturizing, in case the whole air mass would be moved by the blowers. In that case, there would be needed replacement air for balancing the air circulation.

The above described controlled feeding of air through a closed space 30 from the top part of the apparatus to its lower part, the heating of the conducted air and the targeted way of circulating the heated air upwards from the bottom on the other hand ensure that in all conditions, the air circulates along the shortest possible route from heating and moisturizing to the foodstuffs. Further, this kind of air circulation ensures an even temperature and moisture in the whole space T, because the heated air adjusts the foodstuffs immediately at the temperature and humidity of the circulated air, and because the heated humid air has a free access to flow along its natural path upwards from the bottom. The operation of the adjusting device 4 according to the invention is highly energy-efficient, because only a part (I') of the air mass (I) of the interior T of the storage cabinet is being heated and blown at a time; the ratio of the volume of the interior of the housing 30 to the volume of the interior T of the whole apparatus 1 is roughly 1/ 100 - 40 /100, preferably 4/100 - 12 1 100. Now the heating power of the heating resistor 32 and the blowing power of the blower 31 can be adjusted relatively low in comparison with the volume of the heat storage cabinet.

Figure 4 shows a heat storage cabinet 1 according to the above described Figure 1, with a distribution equipment 500 integrated therein. An even temperature and humidity can be maintained inside the heat storage cabinet by means of the above described adjusting mechanism irrespective of the fact that the doors are repeatedly opened and closed. Now on top of the heat storage cabinet 1, in the same frame with the cabinet, there can be installed a distribution equipment 500.

Figure 5 illustrates yet another embodiment of the invention, where the heat storage cabinet 1; 10 comprises two adjacent chambers 100; 100a, 100b in the lengthwise direction of the apparatus. Each chamber 100 has its own adjusting device 4; 4a and 4; 4b, respectively, said adjusting units being similar as to the unit 3 meant for reducing the relative humidity of air and as to the unit 2 meant for moisturizing the air, at least. On the other hand, some of the elements of the adjusting system 5, such as the temperature and humidity data collecting, processing and recording unit 51, and possibly some adjusting unit elements, can be common for both chambers. On top of the water reservoir of the water vaporizing unit 2 of the adjusting devices 4 and adjacent thereto, there are installed food container vessels 9. As can be seen in the uni-chambered heat storage apparatus illustrated in Figures 1 and 4, also in this bi-chambered heat storage apparatus 1; 10, each adjusting device 4; 4a and 4; 4b comprises one vertical air heating and blowing unit 3 and a water vaporizing unit 2 provided with a horizontal water reservoir. In the middle pair of support beams of the frame 60 of the heat storage cabinet 11; 10, there is now installed a partition wall 12 in the widthwise direction of the apparatus 1 for preventing air from flowing between chambers 100a and 100b, and between the corresponding adjusting units 4a and 4b.

By means of the embodiment according to Figure 5, there can also be achieved a heat storage apparatus where air heating and humidity levels in the separate chambers 100; 100a or 100; 100b of one and the same apparatus 1; 10 are mutually remarkably different, depending on the food heating requirements and moisture balance desired in each case.

Figure 5 also shows an advantageous way of placing the widthwise horizontal guide bars 61 of the apparatus: in between the horizontal guide bars 61 and the widthwise sides 1 b, there is advantageously left a space where air is free to circulate.

Figures 7A and 7B illustrate yet another preferred embodiment of the apparatus 1 according to the invention. In principle, the apparatus 1 functions in a similar way as the earlier described embodiments, but the apparatus is realized in a vertical position. Technically this does not remarkably differ from a horizontally installed apparatus; the question is mainly related to how the apparatus is arranged in its location of usage.

In the above specification, only a few embodiments of the invention have been dealt with, and for a man skilled in the art it is obvious that the invention can also be realized in many other ways within the scope of the inventive idea defined in the appended claims.

Hence, the heat storage apparatus according to the invention can be integrated, apart from the distribution device mentioned above, also in other food serving, preparation and processing equipment used in restaurants and institutional kitchens. Earlier this has not been possible, because in known arrangements, the measurement of temperature and humidity in the interior T has been unreliable due to a remarkable fluctuation of the temperature and humidity in the different parts of the interior. However, in the apparatus according to the application at hand, the humidity and temperature conditions of foodstuffs in the interior of the apparatus can be measured reliably with one temperature sensor and one humidity sensor, because an even humidity and temperature are obtained at the correct spots in the interior T, i.e. at the storage locations of foodstuffs, by means of a correct circulation of air. When said measurements are also combined with foodstuffs temperature control by a separate sensor, there is achieved a reliable measurement of the temperature and humidity of the interior air in the apparatus, which enables an efficient control and registering of the storage history of foodstuffs.

The above described integrated apparatuses are unheated or heated planes formed as the top surfaces of a heat storage apparatus, heat compresses and warm and neutral plate distribution equipment, as well as heated and unheated storage shelves and cabinets supported against the top surface of a heat storage apparatus. These can also be provided with various different light fixtures and heat radiators that are placed above the food distribution, service, preparation and processing equipment integrated in the heat storage apparatus.

Advantageously each chamber of the heat storage apparatus 100 is provided with a measuring unit 7, including a thermometer 72 for measuring the temperature of the air in the interior T, and a humidity meter 73 for measuring the relative humidity. In addition, the measuring unit also includes an injection thermometer 71 for measuring the temperature of the foodstuffs S, which thermometer is located physically outside the apparatus but is connected to an adjusting unit 52 and to a temperature and humidity data collecting, processing and recording unit 51 when measuring the temperature.

Further, on the guide bars 61 of the heat storage apparatus, there can be installed, instead of the container vessels 9 described in the exemplary embodiment, for instance detachable drawers that are appropriately designed with GN measures.

## Claims

1. An apparatus (1) for heat storage of foodstuffs, provided with an aperture for taking foodstuffs out of the interior (T) of the apparatus and for setting them in the interior (T) of the apparatus, adjusting devices (4) for adjusting the relative humidity and temperature of air located in the interior (T) of the apparatus, said adjusting devices comprising at least one air moisturizing unit (2) provided with an essentially horizontal water reservoir (23),
**characterized in that** the adjusting devices (4) for adjusting the relative humidity and temperature in the interior (T) further comprise:
- at least one unit (3) for lowering the relative humidity of air, comprising a vertical housing (30), open at the top and bottom ends, placed in the interior (T) of the apparatus, this interior (T) beeing defined by the inner walls (1a, 1b), ceiling and bottom (P) of the device, preferably the housing (30) beeing located approximately in the middle of the interior (T) of the apparatus, inside which housing there are provided heating means (32) for lowering the relative humidity of air and transmission means (31) for taking air from the top part of the interior (T) of the device and for discharging air from the bottom part of the housing (30) in the direction of the bottom (P) of the apparatus, so that by means of said unit (3), only a certain part (I') of total air mass (I) contained in the interior (T) of the apparatus, mentioned certain part (I') beeing the air left inside the housing (3) at a time, can at a time be lowered to a lower relative humidity without actively taking replacement air from outside the apparatus, in which case each housing (30) is placed in the interior (T) of the apparatus (1), at a point where the air flow proceeding downwards from the lower edge, towards the bottom, is turned towards the inner walls (1 a, 1 b) of the apparatus,
- said air moisturizing unit (2), which is located lower than the lower edge of the housing (30) and where at least a water reservoir (23), can be pulled out of the interior (T) of the apparatus,
- an adjusting system (5) for measuring and adjusting the temperature and moisture of foodstuffs and the air temperature and air humidity in the interior (T), said system comprising a measuring unit (7) provided with at least one sensor (73) for measuring the relative humidity of air, one sensor (72) for measuring the air temperature and possibly sensors (71) that can be used for measuring the temperature and/or moisture of foodstuffs; an unit (51) for collecting, processing and recording temperature and humidity data as well as an adjusting unit (52) for adjusting air temperature and humidity.

2. An apparatus (1) according to claim 1, **characterized in that** it contains one or several chambers (100), at least part of said chambers being provided with their own specific unit (3) for lowering the relative humidity of air and their own specific moisturizing unit (2).

3. An apparatus (1) according to claim 2, **characterized in that** at least part of the chambers are provided with measuring units (7) containing a thermometer (72) for measuring the air temperature in the interior (T), a moisture meter (73) for measuring the relative humidity of the air in the interior (T) and a injection thermometer (71) for measuring the temperature of the foodstuffs (S), all of said devices being connected to the adjusting unit (52).

4. An apparatus (1) according to claim 1, **characterized in that** the adjusting unit (52) for adjusting the temperature and humidity of air comprises an adjusting element for dispensing the water that is vaporized from the air moisturizing unit (2) for example by intermediation of a mat resistor (22), and an adjusting element for heating the air mass (I') placed in the housing (30) of the adjusting unit for example by intermediation of a resistor (32).

5. An apparatus (1) according to claim 1, **characterized in that** the housing (30) is located approximately in the middle of the interior (T) of the apparatus, and that inside the vertical housing (30) that is open at its top and bottom ends, there is arranged a resistor (32) for heating the air and a blower (31) for blowing the air out of the bottom part of the housing towards the bottom (P) of the apparatus.

6. An apparatus (1) according to any of the preceding claims, **characterized in that** the air moisturizing unit (2) comprises an essentially horizontal water reservoir (23), a resistor (22) for indirectly heating the water in the water reservoir, and a carriage for moving the water reservoir (23) along guide bars (61) to the interior (T) of the apparatus and out of the interior (T) of the apparatus.

7. An apparatus (1) according to claim 6, **characterized in that** the air moisturizing unit (2) includes a mat resistor (22), which is placed so that it can heat the exterior of the water reservoir (23), preferably the bottom part of the exterior.

8. An apparatus (1) according to claim 6 or 7, **characterized in that** the air moisturizing unit (2) is located on the same vertical line (S) as the vertical housing (30), or immediately adjacent to said vertical line (S).

9. An apparatus (1) according to claim 8, **characterized in that** the air moisturizing unit (2) is arranged detachably at the bottom (P) of the apparatus or in the immediate vicinity thereof, on horizontally (I) running guide bars (61).

10. An apparatus (1) according to any of the preceding claims, **characterized in that** in the interior of the apparatus, there is arranged at least one heat storage chamber (100), so that each chamber is defined by the inner walls, ceiling and bottom of the device, as well as a possible partition wall (12) dividing the interior (T), said partition wall comprising an element arranged in the widthwise (I) direction of the apparatus, which element essentially prevents air from flowing from one chamber to another.

11. An apparatus (1) according to any of the preceding claims, **characterized in that** the apparatus also comprises a number of horizontal container vessels (9), advantageously located in the interior (T) of the apparatus, preferably below the middle level of the interior, on which vessels foodstuffs (S) can be placed.

12. An apparatus (1) according to any of the preceding claims, **characterized in that** the unit (3) of the adjusting device (4), meant for lowering the relative humidity of air, is a rectangular vertical housing that is detachably connected on vertical support beams (6) arranged in the interior of the apparatus, so that the lengthwise direction of said housing proceeds in the widthwise direction (I) of the apparatus, and that the air moisturizing unit (2) is placed detachably at the bottom (P) of the apparatus or in the vicinity thereof, on horizontal guide bars (61) of two adjacent pairs of support beams (8).

13. An apparatus (1) according to claim 1, **characterized in that** it is integrated with a food dispensing device (700), a food gathering plane, a heated or unheated top plane, a heat compress, a warm or neutral plate dispenser arrangement, in which case against the upper surface of the device (1) meant for heat storage, there may also be supported heated or unheated storage shelves and cabinets, as well as light fixtures and heat radiators that are located above the food dispensing, serving, preparing and processing equipment.

14. A method for adjusting the temperature and relative humidity of the interior air in a heat storage apparatus (1) according to claim 1, **characterized in that**
- only a certain part (I') of the total air mass (I) contained in the interior (T) of the apparatus is at a time lowered to a relative humidity lower than that of the rest of the air mass contained in the interior (T), in a housing (30) provided in the Interior, said certain part (I') of the total air mass beeing the air left inside the housing (3) at a time, so that the air mass (I') is taken from the top part of the interior (T) to the housing (30), its humidity is lowered to a relative humidity lower than that of the rest of the air mass inside the housing by heating means (32), and thereafter the air mass (I') is conducted, by means of the housing (30), to the bottom part of the interior and set in a motion directed downwards and further towards the inner walls (1a, 1 b) of the apparatus when being discharged from the housing (30),
- the amount of water vaporized from the moisturizing unit (2) and the heat amount to be transferred to a certain part (I') of the air mass (I) contained in the interior (T), and possibly also the transfer rate of said heated air after heating, is adjusted on the basis of measurement results obtained from a temperature sensor (72) measuring the temperature of the interior (T) and from a sensor (73) measuring the relative humidity of the interior air, by means of an adjusting unit (52), so that an even and desired relative humidity (RH %) and temperature prevail in the whole interior (T).

15. A method according to claim 14, **characterized in that** the adjusting unit (52) dispenses moisture in the air by a water heating resistor (22) of the moisturizing unit (2) and heats the air mass (I') contained in the housing (30) by intermediation of a resistor (32).

16. A method according to claim 15, **characterized in that** the amount of water vaporized from the moisturizing unit (2) and the heat amount to be transferred to a certain part (I') of the air mass (I) contained in the interior (T), inside the housing (30), and possibly also the transfer rate of said heated air out of the housing (30) by means of a blower arranged in said housing, are adjusted by a PDI adjusting unit and/or a digital thermostat provided in the adjusting unit (52).

17. A method according to claim 15 or 16, **characterized in that** the temperature of the foodstuff contained in the container vessels (9) is measured from time to time by a temperature sensor (71), and on the basis of the measurement results obtained from the sensor (71), the amount of the water vaporized from the moisturizing unit (2) is adjusted, as well as the heat amount to be transferred to a certain part (I') of the air mass (I) contained in the interior (T), and possibly also the transfer rate of said heated air after heating.

18. A method according to any of the claims 14-17, **characterized in that** the relative humidity of the air mass (I) contained in the interior (T) is maintained more or less the same as the balance moisture of the foodstuffs (S) stored in the interior (T).

19. A method according to any of the claims 14-18, **characterized in that** the readings of the relative humidity (RH %) of the air in the interior (T) and the temperature (T) are measured, and that the relative humidity of air is measured at certain intervals or continuously, and the measured readings are stored and/or sent to a control unit.

20. A method according to claim 19, **characterized in that** air is sucked in to be heated in the housing (30) through the top part of the interior (T) and conducted through or past the heating resistor (32) of the housing, towards the bottom (P) of the heat storage apparatus (1), from where the air flow is arranged to turn in the direction of the bottom towards the inner walls (1a, 1b) of the apparatus.

21. A method according to claim 20, **characterised in that** at least part of the heated air mass (I') is after heating arranged to be directed to a heatable water reservoir (23) of the air moisturizing unit (2), which reservoir is advantageously located in the vicinity of the bottom (P) of the apparatus (1), so that air circulates through the shortest possible route from the unit (3) meant for lowering the relative humidity of air, to the air moisturizing unit (2) and further to the foodstuffs contained in said container vessels (9).

22. A method according to claim 20, **characterized in that** the air mass moisturized by the moisturizing unit (2) is arranged to proceed from the foodstuffs contained in the container vessels (9) towards the inner walls (1a, 1b) of the apparatus and to turn at the inner walls upwardly towards the ceiling of the apparatus, from where the air circulates to the top part of the unit (3) meant for lowering the relative humidity of air.

## Patentansprüche

1. Vorrichtung (1) zur Wärmespeicherung von Nahrungsmitteln, ausgestattet mit einer Öffnung, um Nahrungsmittel aus dem Inneren (T) der Vorrichtung zu nehmen und sie in das Innere (T) der Vorrichtung zu stellen, Anpassungsvorrichtungen (4) zum Anpassen der relativen Feuchtigkeit und Temperatur von in dem Inneren (T) der Vorrichtung befindlicher Luft, wobei die Anpassungsvorrichtungen wenigstens eine Luftbefeuchtungseinheit (2) umfassen, die mit einem im Wesentlichen horizontalen Wasserreservoir (23) ausgestattet ist,
**dadurch gekennzeichnet, dass** die Anpassungsvorrichtungen (4) zum Anpassen der relativen Feuchtigkeit und Temperatur in dem Inneren (T) ferner umfassen:
wenigstens eine Einheit (3) zum Senken der relativen Luftfeuchtigkeit, umfassend ein vertikales Gehäuse (30), das an dem oberen und dem unteren Ende offen ist und im Inneren (T) der Vorrichtung platziert ist, wobei dieses Innere (T) durch die Innenwände (1a, 1b), die Decke und den Boden (P) der Vorrichtung definiert ist, wobei sich das Gehäuse (30) vorzugsweise annähernd in der Mitte des Inneren (T) der Vorrichtung befindet, wobei in dem Gehäuse Heizmittel (32) zum Senken der relativen Luftfeuchtigkeit und Übertragungsmittel (31), um Luft von dem oberen Bereich des Inneren (T) der Vorrichtung zu nehmen und Luft von dem unteren Bereich des Gehäuses (30) in die Richtung des Bodens (P) der Vorrichtung abzugeben, vorgesehen sind, so dass mittels der Einheit (3) nur ein bestimmter Teil (I') der gesamten in dem Inneren (T) der Vorrichtung enthaltenen Luftmasse (I) - wobei der erwähnte bestimmte Teil (I') die zu einer Zeit in dem Gehäuse (3) übrige Luft ist - auf einmal auf eine niedrigere relative Feuchtigkeit abgesenkt werden kann, ohne aktiv Ersatzluft von außerhalb der Vorrichtung zu nehmen, wobei in diesem Fall jedes Gehäuse (30) in dem Inneren (T) der Vorrichtung (1) an einer Stelle platziert ist, wo der sich vom unteren Rand abwärts zum Boden bewegende Luftstrom zu den Innenwänden (1a, 1b) der Vorrichtung gewendet wird,
die Luftbefeuchtungseinheit (2), die tiefer als der untere Rand des Gehäuses (30) angeordnet ist und wo wenigstens ein Wasserreservoir (23) aus dem Inneren (T) der Vorrichtung gezogen werden kann,
ein Anpassungssystem (5) zum Messen und Anpassen der Temperatur und Feuchtigkeit der Nahrungsmittel und der Lufttemperatur und Luftfeuchtigkeit in dem Inneren (T), wobei das System umfasst: eine Messeinheit (7), die mit wenigstens einem Sensor (73) zum Messen der relativen Luftfeuchtigkeit, einem Sensor (72) zum Messen der Lufttemperatur und möglicherweise mit Sensoren (71) ausgestattet ist, die zum Messen der Temperatur und/ oder Feuchtigkeit von Nahrungsmitteln verwendet werden können; eine Einheit (51) zum Sammeln, Verarbeiten und Speichern von Temperatur- und Feuchtigkeitsdaten sowie eine Anpassungseinheit (52) zum Anpassen von Lufttemperatur und -feuchtigkeit.

2. Vorrichtung (1) nach Anspruch 1, **dadurch gekennzeichnet, dass** sie eine oder mehr Kammern (100) enthält, wobei wenigstens ein Teil der Kammern mit ihrer eigenen spezifischen Einheit (3) zum Senken der relativen Luftfeuchtigkeit und ihrer eigenen spezifischen Befeuchtungseinheit (2) ausgestattet ist.

3. Vorrichtung (1) nach Anspruch 2, **dadurch gekennzeichnet, dass** wenigstens ein Teil der Kammern mit Messeinheiten (7) ausgestattet ist, die ein Thermometer (72) zum Messen der Lufttemperatur in dem Inneren (T), einen Feuchtigkeitsmesser (73) zum Messen der relativen Luftfeuchtigkeit in dem Inneren (T) und ein Injektionsthermometer (71) zum Messen der Temperatur der Nahrungsmittel (S) enthalten, wobei alle diese Vorrichtungen mit der Anpassungseinheit (52) verbunden sind.

4. Vorrichtung (1) nach Anspruch 1, **dadurch gekennzeichnet, dass** die Anpassungseinheit (52) zum Anpassen der Temperatur und Feuchtigkeit von Luft umfasst: ein Anpassungselement zum Abgeben des Wassers, das von der Luftbefeuchtungseinheit (2) verdampft wird, zum Beispiel durch Vermittlung eines Mattenwiderstands (engl.: mat resistor) (22), und ein Anpassungselement zum Heizen der Luftmasse (I'), die sich in dem Gehäuse (30) der Anpassungseinheit befindet, zum Beispiel durch Vermittlung eines Widerstands (32).

5. Vorrichtung (1) nach Anspruch 1, **dadurch gekennzeichnet, dass** das Gehäuse (30) sich annähernd in der Mitte des Inneren (T) der Vorrichtung befindet, und dass in dem vertikalen Gehäuse (30), das an seinem oberen und seinem unteren Ende offen ist, ein Widerstand (32) zum Heizen der Luft und ein Gebläse (31), um die Luft aus dem unteren Bereich des Gehäuses zum Boden (P) der Vorrichtung hin zu blasen, angeordnet sind.

6. Vorrichtung (1) nach einem der vorhergehenden Ansprüche, **dadurch gekennzeichnet, dass** die Luftbefeuchtungseinheit (2) umfasst: ein im Wesentlichen horizontales Wasserreservoir (23), einen Widerstand (22) zum indirekten Heizen des Wassers in dem Wasserreservoir und einen Wagen zum Bewegen des Wasserreservoirs (23) entlang von Führungsbalken (61) zu dem Inneren (T) der Vorrichtung und aus dem Inneren (T) der Vorrichtung heraus.

7. Vorrichtung (1) nach Anspruch 6, **dadurch gekennzeichnet, dass** die Luftbefeuchtungseinheit (2) einen Mattenwiderstand (22) umfasst, der so platziert ist, dass er das Äußere des Wasserreservoirs (23), vorzugsweise den unteren Teil des Äußeren, heizen kann.

8. Vorrichtung (1) nach Anspruch 6 oder 7, **dadurch gekennzeichnet, dass** die Luftbefeuchtungseinheit (2) sich auf derselben vertikalen Linie (S) wie das vertikale Gehäuse (30) befindet oder der vertikalen Linie (S) unmittelbar benachbart ist.

9. Vorrichtung (1) nach Anspruch 8, **dadurch gekennzeichnet, dass** die Luftbefeuchtungseinheit (2) lösbar an dem Boden (P) der Vorrichtung oder in unmittelbarer Nähe davon an horizontal (I) verlaufenden Führungsbalken (61) angeordnet ist.

10. Vorrichtung (1) nach einem der vorhergehenden Ansprüche, **dadurch gekennzeichnet, dass** in dem Inneren der Vorrichtung wenigstens eine Wärmespeicherkammer (100) angeordnet ist, so dass jede Kammer durch die Innenwände, Decke und Boden der Vorrichtung definiert ist, ebenso wie eine mögliche Teilungswand (12), die das Innere (T) teilt, wobei die Teilungswand ein Element umfasst, das in der Breitenrichtung (I) der Vorrichtung angeordnet ist, wobei das Element im Wesentlichen verhindert, dass Luft von einer Kammer zu einer anderen strömt.

11. Vorrichtung (1) nach einem der vorhergehenden Ansprüche, **dadurch gekennzeichnet, dass** die Vorrichtung auch eine Anzahl horizontaler Behältergefäße (9) umfasst, die sich vorteilhafterweise in dem Inneren (T) der Vorrichtung befinden, vorzugsweise unterhalb der mittleren Höhe des Inneren, auf denen Gefäß-Nahrungsmittel (S) (engl: vessels foodstuffs) platziert werden können.

12. Vorrichtung (1) nach einem der vorhergehenden Ansprüche, **dadurch gekennzeichnet, dass** die Einheit (3) der Anpassungsvorrichtung (4), die zum Senken der relativen Luftfeuchtigkeit vorgesehen ist, ein rechteckiges vertikales Gehäuse ist, das lösbar mit vertikalen Stützträgern (6) verbunden ist, die in dem Inneren der Vorrichtung angeordnet sind, so dass die Längenrichtung des Gehäuses in die Breitenrichtung (I) der Vorrichtung verläuft, und dass die Luftbefeuchtungseinheit (2) lösbar an dem Boden (P) der Vorrichtung oder in der Nähe davon auf horizontalen Führungsbalken (61) von zwei benachbarten Paaren von Stützträgern (8) platziert ist.

13. Vorrichtung (1) nach Anspruch 1, **dadurch gekennzeichnet, dass** sie mit einer Nahrungsabgabevorrichtung (700), einer Nahrungssammlungsebene, einer beheizten oder unbeheizten oberen Ebene, einer Wärmekompresse, einer warmen oder neutralen Tellerabgabeanordnung integriert ist, wobei in diesem Fall auch beheizte oder unbeheizte Lagerregale oder -kabinette ebenso wie Beleuchtungsvorrichtungen und Wärmeradiatoren, die sich über Nahrungsabgabe-, Bedienungs-, Preparier- und Verarbeitungsausrüstung befinden, gegen die obere Fläche der zur Wärmespeicherung vorgesehenen Vorrichtung (1) gestützt sein können.

14. Verfahren zum Anpassen der Temperatur und der relativen Feuchtigkeit der Innenluft in einer Wärmespeichervorrichtung (1) nach Anspruch 1, **dadurch gekennzeichnet, dass**
nur ein bestimmter Teil (I') der gesamten in dem Inneren (T) der Vorrichtung enthaltenen Luftmasse (I) in einem in dem Inneren vorgesehenen Gehäuse (30) auf einmal auf eine relative Feuchtigkeit abgesenkt wird, die niedriger als jene des Rests der in dem Inneren (T) enthaltenen Luftmasse ist, wobei der bestimmte Teil (I') der gesamten Luftmasse die zu einer Zeit in dem Gehäuse (3) übrige Luft ist, so dass die Luftmasse (I') von dem oberen Bereich des Inneren (T) zu dem Gehäuse (30) gebracht wird, ihre Feuchtigkeit durch Heizmittel (32) auf eine relative Feuchtigkeit gesenkt wird, die niedriger als die des Rests der Luftmasse in dem Gehäuse ist, und danach die Luftmasse (I') mittels des Gehäuses (30) zu dem unteren Bereich des Inneren geleitet wird und in eine Bewegung gesetzt wird, die nabwärts und bei Abgabe aus dem Gehäuse (30) weiter zu den Innenwänden (1 a, 1b) der Vorrichtung hin gerichtet ist,
dass die von der Befeuchtungseinheit (2) verdampfte Wassermenge und die Wärmemenge, die an einen bestimmten Teil (I') der in dem Inneren (T) enthaltenen Luftmasse (I) übertragen werden soll, und möglicherweise auch die Übertragungsrate der erwärmten Luft nach dem Heizen, mittels einer Anpassungseinheit (52) auf der Basis von Messergebnissen angepasst werden, die von einem Temperatursensor (72), der die Temperatur des Inneren (T) misst, und von einem Sensor (73), der die relative Feuchtigkeit der Innenluft misst, mittels einer Anpassungseinheit (52) erhalten werden, so dass in dem gesamten Inneren (T) eine gleichmäßige und gewünschte relative Feuchtigkeit (RH %) und Temperatur herrschen.

15. Verfahren nach Anspruch 14, **dadurch gekennzeichnet, dass** die Anpassungseinheit (52) durch einen Wasserheizwiderstand (22) der Befeuchtungseinheit (2) in der Luft Feuchtigkeit abgibt und die in dem Gehäuse (30) enthaltene Luftmasse (I') durch Vermittlung eines Widerstands (32) erhitzt.

16. Verfahren nach Anspruch 15, **dadurch gekennzeichnet, dass** die von der Befeuchtungseinheit (2) verdampfte Wassermenge und die an einen bestimmten Teil (I') der in dem Inneren (T) in dem Gehäuse (30) enthaltenen Luftmasse (I) zu übertragene Wärmemenge und möglicherweise auch die Übertragungsrate der erwärmten Luft aus dem Gehäuse (30) heraus mittels eines in dem Gehäuse angeordneten Gebläses durch eine PDI-Anpassungseinheit und/ oder ein digitales Thermostat, das in der Anpassungseinheit (52) vorgesehen ist, angepasst werden.

17. Verfahren nach Anspruch 15 oder 16, **dadurch gekennzeichnet, dass** die Temperatur der in den Behältergefäßen (9) enthaltenen Nahrungsmittel von Zeit zu Zeit durch einen Temperatursensor (71) gemessen wird und dass auf der Basis der von dem Sensor (71) erhaltenen Messergebnisse die von der Befeuchtungseinheit (2) verdampfte Wassermenge ebenso wie die auf einen bestimmten Teil (I') der in dem Inneren (T) enthaltenen Luftmasse (I) zu übertragene Wärmemenge, und möglicherweise auch die Übertragungsrate der erwärmten Luft nach dem Heizen, angepasst werden.

18. Verfahren nach einem der Ansprüche 14 bis 17, **dadurch gekennzeichnet, dass** die relative Feuchtigkeit der in dem Inneren (T) enthaltenen Luftmasse (I) mehr oder weniger genauso hoch wie die Gleichgewichtsfeuchtigkeit der in dem Inneren (T) gelagerten Nahrungsmittel (S) gehalten wird.

19. Verfahren nach einem der Ansprüche 14 bis 18, **dadurch gekennzeichnet, dass** die Werte der relativen Feuchtigkeit (RH %) der Luft im Inneren (T) und der Temperatur (T) gemessen werden und dass die relative Feuchtigkeit der Luft in bestimmten Abständen oder durchgehend gemessen wird und dass die gemessenen Werte gespeichert und/ oder an eine Regelungs-/Steuerungseinheit geschickt werden.

20. Verfahren nach Anspruch 19, **dadurch gekennzeichnet, dass** Luft durch den oberen Bereich des Inneren (T) eingesaugt wird, um in dem Gehäuse (30) erhitzt zu werden und durch den Heizwiderstand (32) des Gehäuses oder an diesem vorbei zu dem Boden (P) der Wärmespeichervorrichtung (1) hin geführt wird, von wo aus der Luftstrom in die Richtung des Bodens zu den Innenwänden (1a, 1 b) der Vorrichtung hin gewendet wird.

21. Verfahren nach Anspruch 20, **dadurch gekennzeichnet, dass** wenigstens ein Teil der erwärmten Luftmasse (I') nach dem Erhitzen zu einem heizbarem Wasserreservoir (23) der Luftbefeuchtungseinheit (2) geführt wird, wobei das Reservoir sich vorteilhafterweise in der Nähe des Bodens (P) der Vorrichtung (1) befindet, so dass Luft auf dem kürzesten möglichen Weg von der zum Senken der relativen Feuchtigkeit vorgesehenen Einheit (3) zu der Luftbefeuchtungseinheit (2) und weiter zu den in den Behältergefäßen (9) enthaltenen Nahrungsmitteln zirkuliert.

22. Verfahren nach Anspruch 20, **dadurch gekennzeichnet, dass** die von der Befeuchtungseinheit (2) befeuchtete Luftmasse dazu veranlasst ist, von den Nahrungsmitteln, die in den Behältergefäßen (9) enthalten sind, zu den Innenwänden (1 a, 1 b) der Vorrichtung zu verlaufen und sich an den Innenwänden aufwärts zur Decke der Vorrichtung hin zu wenden, von wo aus die Luft zum oberen Bereich der zum Senken der relativen Luftfeuchtigkeit vorgesehenen Einheit (3) zirkuliert.

## Revendications

1. Appareil (1) pour stocker au chaud des aliments, muni d'une ouverture pour sortir des aliments du compartiment intérieur (T) de l'appareil et pour les placer dans le compartiment intérieur (T) de l'appareil, de dispositifs de réglage (4) pour régler l'humidité relative et la température de l'air situé dans le compartiment intérieur (T) de l'appareil, lesdits dispositifs de réglage comprenant au moins une unité d'humidification d'air (2) munie d'un réservoir d'eau (23) sensiblement horizontal,
**caractérisé en ce que**
les dispositifs de réglage (4), pour régler l'humidité relative et la température de l'air situé dans le compartiment intérieur (T) de l'appareil, comprennent en outre :
- au moins une unité (3) pour abaisser l'humidité relative de l'air, comprenant un boîtier (30) vertical, ouvert aux extrémités supérieure et inférieure, placé dans le compartiment intérieur (T) de l'appareil, ce compartiment intérieur (T) étant défini par des parois intérieures (1a, 1b), un plafond et un fond (P) du dispositif, de préférence le boîtier (30) étant disposé à peu près au milieu du compartiment intérieur (T) du dispositif, boîtier à l'intérieur duquel sont prévus des moyens de chauffage (32), pour abaisser l'humidité relative de l'air, et des moyens de transmission (31), pour prélever de l'air de la partie supérieure du compartiment intérieur (T) du dispositif et pour décharger l'air de la partie inférieure du boîtier (30), en direction du fond (P) de l'appareil, de manière que, au moyen de ladite unité (3), une certaine partie (I') seulement de la masse d'air totale (I) contenue dans le compartiment intérieur (T) de l'appareil, la certaine partie mentionnée étant l'air laissé à l'intérieur du boîtier (3) à certain moment, puisse à un certain moment être abaissée à une humidité relative inférieure, sans prendre activement de l'air de remplacement à l'extérieur de l'appareil, dans quel cas chaque boîtier (30) est placé dans le compartiment intérieur (T) de l'appareil (1), à un degré auquel l'écoulement d'air progressant vers le bas à partir du bord inférieur, vers le fond, est dévié vers les parois intérieures (1a, 1b) de l'appareil,
- ladite unité d'humidification d'air (2), disposée plus bas que le bord inférieur du boîtier (30) et là où se trouve au moins un réservoir d'eau (23), peut être retirée du compartiment intérieur (T) de l'appareil,
- un système de réglage (5), pour mesurer et régler la température et l'humidité d'aliments et la température de l'air et l'humidité de l'air dans le compartiment intérieur (T), ledit système comprenant une unité de mesure (7) munie d'au moins un capteur (73) pour mesurer l'humidité relative de l'air, un capteur (72) pour mesurer la température de l'air, et d'éventuels capteurs (71), pouvant être utilisés pour mesurer la température et/ou l'humidité d'aliments ; une unité (51) pour collecter, traiter et enregistrer des données de température et d'humidité, ainsi qu'une unité de réglage (52) pour régler la température et l'humidité de l'air.

2. Appareil (1) selon la revendication 1, **caractérisé en ce qu'**il contient une ou plusieurs chambre(s) (100), au moins une partie desdites chambres étant munie de leur unité (3) spécifique propre, pour abaisser l'humidité relative de l'air, et de leur unité d'humidification (2) spécifique propre.

3. Appareil (1) selon la revendication 2, **caractérisé en ce qu'**au moins une partie des chambres sont munies d'unités de mesure (7), contenant un thermomètre (72) pour mesurer la température de l'air du compartiment intérieur (T), un indicateur d'humidité (73) pour mesurer l'humidité relative de l'air dans le compartiment intérieur (T), et un thermomètre à injection (71), pour mesurer la température des aliments (S), la totalité desdits dispositifs étant connectés à l'unité de réglage (52).

4. Appareil (1) selon la revendication 1, **caractérisé en ce que** l'unité de réglage (52) pour régler la température et l'humidité de l'air comprend un élément de réglage pour distribuer l'eau qui est vaporisée par l'unité d'humidification d'air (2), par exemple par l'intermédiaire d'une résistance en nappe (22), et un élément de réglage pour chauffer la masse d'air (I') placée dans le boîtier (30) de l'unité de réglage, par exemple par l'intermédiaire d'une résistance (32).

5. Appareil (1) selon la revendication 1, **caractérisé en ce que** le boîtier (30) est disposé à peu près au milieu du compartiment intérieur (T) de l'appareil, et **en ce qu'**à l'intérieur du boîtier (30) vertical, ouvert a ses extrémités supérieure et inférieure, est disposée une résistance (32) pour chauffer l'air et une soufflante (31) pour souffler l'air hors de la partie de fond du boîtier, vers le fond (P) de l'appareil.

6. Appareil (1) selon l'une quelconque des revendications précédentes, **caractérisé en ce que** l'unité d'humidification (2) comprend un réservoir d'eau (23) sensiblement horizontal, une résistance (22) pour chauffer indirectement l'eau se trouvant dans le réservoir d'eau, et un chariot pour déplacer le réservoir d'eau (23) le long de barres de guidage (61), dans le compartiment intérieur (T) de l'appareil et hors du compartiment intérieur (T) de l'appareil.

7. Appareil (1) selon la revendication 6, **caractérisé en ce que** l'unité d'humidification (2) comprend une résistance en nappe (22), placée de manière qu'elle puisse chauffer l'extérieur du réservoir d'eau (23), de préférence la partie inférieure de l'extérieur.

8. Appareil (1) selon la revendication 6 ou 7, **caractérisé en ce que** l'unité d'humidification (2) est située sur la même ligne (S) verticale que le boîtier vertical (30), ou de manière immédiatement adjacente à ladite ligne (S) verticale.

9. Appareil (1) selon la revendication 8, **caractérisé en ce que** l'unité d'humidification (2) est agencée de manière détachable au niveau du fond (P) de l'appareil ou à proximité immédiate de celui-ci, sur des barres de guidage (61) s'étendant horizontalement (I).

10. Dispositif selon l'une quelconque des revendications précédentes, **caractérisé en ce qu'**à l'intérieur de l'appareil est agencée au moins une chambre de stockage (100), de manière que chaque chambre soit définie par les parois intérieures, le plafond et le fond du dispositif, ainsi qu'une éventuelle paroi de subdivision (12), divisant le compartiment intérieur (T), ladite paroi de subdivision comprenant un élément agencé dans la direction de la largeur (I) de l'appareil, ledit élément empêchant essentiellement l'air de s'écouler d'une chambre à une autre.

11. Dispositif selon l'une quelconque des revendications précédentes, **caractérisé en ce que** l'appareil comprend également une pluralité de récipients à conteneur (9) horizontaux, avantageusement disposés dans le compartiment intérieur (T) de l'appareil, de préférence au-dessous du niveau médian, récipients sur lesquels des aliments (S) peuvent être placés.

12. Dispositif selon l'une quelconque des revendications précédentes, **caractérisé en ce que** l'unité (3) du dispositif de réglage (4), conçue pour abaisser l'humidité relative de l'air, est un boîtier vertical rectangulaire, relié de manière détachable sur des poutres de support (6) verticales agencées dans le compartiment intérieur du dispositif, de manière que la direction en largeur dudit boîtier s'étende dans la direction de la largeur (I) de l'appareil, et **en ce que** l'unité d'humidification d'air (2) est placée de manière détachable au niveau du fond (P) de l'appareil ou à proximité de celui-ci, sur des barres de guidage (61) horizontales de deux paires adjacentes de poutres support (8).

13. Appareil (1) selon la revendication 1, **caractérisé en ce qu'**il est intégré à un dispositif distributeur de nourriture (700), un plan de collecte d'aliments, un plan supérieur chauffé ou non chauffé, une compression à chaud, un agencement distributeur à plaque chaude ou neutre, cas dans lequel, contre la surface supérieure du dispositif (1) conçu pour assurer un stockage à chaud, peuvent également être supportées des tablettes de rayonnage et des coffrets, ainsi que des appareils d'éclairage et des éléments rayonnant de la chaleur, disposés au-dessus de l'équipement pour distribuer, servir, préparer et traiter des aliments.

14. Procédé de réglage de la température et de l'humidité relative de l'air intérieur dans un appareil de stockage à chaud (1) selon la revendication 1, **caractérisé en ce que**
- seule une certaine partie (I') de la masse d'air totale (I) contenue dans le compartiment intérieur (T) de l'appareil est à un certain moment abaissée à une humidité relative inférieure à celle du reste de la masse d'air contenue dans le compartiment intérieur (T), dans un boîtier (30) prévu dans le compartiment intérieur, ladite certaine partie (I') de la masse d'air totale étant l'air laissé à l'intérieur du boîtier (3) à un certain moment, de manière que la masse d'air (I') soit prise de la partie supérieure du compartiment intérieur (T) au boîtier (30), son humidité est abaissée à une humidité relative inférieure à celle du reste de la masse d'air située à l'intérieur du boîtier, par des moyens de chauffage (32) et, ensuite, la masse d'air (I') est guidée, au moyen du boîtier (30), à la partie inférieure du compartiment intérieur et entraînée en un mouvement dirigé vers le bas et en outre vers les parois intérieures (1a, 1b de l'appareil lorsqu'il est déchargé du boîtier (30),
- la quantité d'eau, vaporisée par l'unité d'humidification (2), et la quantité de chaleur à transférer à une certaine partie (I') de la masse d'air (I) contenue dans le compartiment intérieur (T), et, éventuellement, le taux de transfert dudit air chauffé après chauffage, sont réglés sur la base de résultats de mesure obtenus d'un capteur de température (72), mesurant la température du compartiment intérieur (T) et d'un capteur (73) mesurant l'humidité relative de l'air intérieur, au moyen d'une unité de réglage (52) , de manière qu'une humidité relative (RH %) et une température uniformes et souhaitées prévalent dans l'ensemble du compartiment intérieur (T).

15. Procédé selon la revendication 14, **caractérisé en ce que** l'unité de réglage (52) distribue l'humidité dans l'air, par une résistance de chauffage d'eau (22) de l'unité d'humidification (2), et chauffe la masse d'air (I') contenue dans le boîtier (30) par l'intermédiaire d'une résistance (32).

16. Procédé selon la revendication 15, **caractérisé en ce que** la quantité d'eau vaporisée par l'unité d'humidification (2) et la quantité de chaleur à transférer à une certaine partie (I') de la masse d'air (I) contenue dans le compartiment intérieur (T), à l'intérieur du boîtier (30), et éventuellement également le taux de transfert dudit air chauffé hors du boîtier (30), au moyen d'une soufflante agencée dans ledit boîtier, sont réglés par une unité de réglage à caractéristique PDI et/ou un thermostat numérique prévu dans l'unité de réglage (52)..

17. Procédé selon la revendication 15 ou 16, **caractérisé en ce que** la température de l'aliment contenu dans les récipients conteneurs (9) est mesurée de temps en temps par un capteur de température (71) et, sur la base des résultats de mesure obtenus par le capteur (71), la quantité d'eau vaporisée par l'unité d'humidification (2) est réglée, ainsi que la quantité de chaleur à transférer à une certaine partie (I') de la masse d'air (I) contenue dans le compartiment intérieur (T) et, éventuellement, également le taux de transfert dudit air chauffé après chauffage.

18. Procédé selon l'une quelconque des revendications 14 à 17, **caractérisé en ce que** l'humidité relative de la masse d'air (I) contenue dans le compartiment intérieur (T) est maintenue plus ou moins identique à l'humidité d'équilibre des aliments (S) stockés dans le compartiment intérieur (T).

19. Procédé selon l'une quelconque des revendications 14 à 18, **caractérisé en ce que** les lectures de l'humidité relative (RH %) de l'air présent dans le compartiment intérieur (T) et la température sont mesurées, et **en ce que** l'humidité relative de l'air est mesurée à certains intervalles de temps ou de manière continue, et les lectures mesurées sont stockées en mémoire et/ou envoyées à une unité de commande.

20. Procédé selon la revendication 19, **caractérisé en ce que** de l'air est aspiré, pour être chauffé dans le boîtier (30), par la partie supérieure du compartiment intérieur (T), et conduit à travers ou après la résistance de chauffage (32) du boîtier, vers le fond (P) de l'appareil de stockage à chaud (1), d'où l'écoulement d'air est agencé pour tourner dans la direction du fond, vers les parois intérieures (1a, 1b) de l'appareil.

21. Procédé selon la revendication 20, **caractérisé en ce qu'**au moins une partie de la masse d'air (I') chauffée est, après chauffage, agencée pour être dirigée vers un réservoir d'eau (23), susceptible d'être chauffé, de l'unité d'humidité d'humidification d'air (2), ledit réservoir étant avantageusement disposé à proximité du fond (P) de l'appareil (1), de manière que de l'air circule par le chemin le plus court possible à partir de l'unité (3) conçue pour abaisser l'humidité relative de l'air, vers l'unité d'humidification d'air (2) et, en outre, aux aliments contenus dans lesdits récipients conteneurs (9).

22. Procédé selon la revendication 20, **caractérisé en ce que** la masse d'air humidifiée par l'unité d'humidification (2) est agencée pour faire circuler, à partir des aliments contenus dans les récipients conteneurs (9) vers les parois intérieures (1a, 1b) de l'appareil, et tourner aux parois intérieures, vers le haut, vers le plafond de l'appareil, d'où l'air circule vers la partie supérieure de l'unité (3) conçue pour abaisser l'humidité relative de l'air.
